# EUROPEAN PATENT APPLICATION

(11) **EP 4 398 335 A1**
(43) Date of publication of application: **10.07.2024**
(21) Application number: 23207295.9
(22) Date of filing: 01.11.2023
(51) Int. Cl.: H01M 4/1395, H01M 4/36, H01M 4/38, H01M 10/052, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 04.01.2023 KR 20230001357
(71) Applicant: Samsung SDI Co., Ltd., Yongin-si, Gyeonggi-do 17084 (KR)
(72) Inventor: KIM, Young-Min, 17084 Yongin-si (KR); SHIN, Changsu, 17084 Yongin-si (KR); PARK, Sunil, 17084 Yongin-si (KR); KANG, Eunji, 17084 Yongin-si (KR); OH, Doori, 17084 Yongin-si (KR); WON, Jongmin, 17084 Yongin-si (KR); KIM, Yookyung, 17084 Yongin-si (KR)
(74) Representative: Marks & Clerk LLP

(57) **Abstract**

A negative active material for a rechargeable lithium battery and a rechargeable lithium battery including the negative active material, the negative active material includes a silicon-carbon composite including secondary particles in which nano silicon primary particles are agglomerated, and an amorphous carbon coating layer on a surface of the secondary particles; and sodium silicate.

## Description

### BACKGROUND

### 1. Field

Embodiments relate to a negative active material for a rechargeable lithium battery and a rechargeable lithium battery including the same.

### 2. Description of the Related Art

Recently, the rapid development of electronic devices such as mobile phones, laptop computers, and electric vehicles using batteries has resulted in increases in demand for rechargeable batteries with relatively high capacity and lighter weight.

### SUMMARY

The embodiments may be realized by providing a negative active material for a rechargeable lithium battery, the negative active material including a silicon-carbon composite including secondary particles in which nano silicon primary particles are agglomerated, and an amorphous carbon coating layer on a surface of the secondary particles; and sodium silicate.

The nano silicon primary particles may have a full width at half maximum FWHM(111) at a (111) plane of about 0.3 degree (°) to about 7 degree (°) by an X-ray diffraction using a CuKα ray.

The sodium silicate may be on a surface of the nano silicon primary particles.

The silicon-carbon composite may have an average particle diameter of about 30 µm or less.

The silicon-carbon composite may further include crystalline carbon.

The negative active material for the rechargeable lithium battery may be prepared by adding a Na source to a nano silicon liquid to prepare a mixed liquid; drying the mixed liquid to prepare a dried product; mixing the dried product with an amorphous carbon precursor to prepare a mixture; and heat-treating the mixture.

The Na source may include NaOH, Na₂CO₃, or combinations thereof.

The embodiments may be realized by providing a rechargeable lithium battery including a negative electrode including the negative active material according to an embodiment; a positive electrode; and an electrolyte.

At least some of the above and other features of the invention are set out in the claims.

### BRIEF DESCRIPTION OF THE DRAWINGS

Features will be apparent to those of skill in the art by describing in detail embodiments with reference to the attached drawings in which:
FIG. 1 is a drawing schematically showing a structure of a negative active material for a rechargeable lithium battery according to some embodiments.
FIG. 2 is a schematic diagram showing a rechargeable lithium battery according to some embodiments.
FIG. 3 is a graph showing the X-ray diffraction characteristics measured by using a CuKα ray for the negative active materials of Example 1 and Comparative Example 1.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include," "have", or the like are intended to designate that the performed characteristics, numbers, steps, constituted elements, or a combination thereof is present, but it should be understood that the possibility of presence or addition of one or more other characteristics, numbers, steps, constituted element, or a combination are not to be precluded in advance.

In some embodiments, herein, "layer" includes a shape totally formed on the entire surface or a shape partial surface, when viewed from a plane view

In the specification, "or" is not to be construed in an exclusive sense, for example, "A or B" may be interpreted to include A, B, A+B, or the like.

In the present disclosure, when a definition is not otherwise provided, a particle diameter or size may indicate an average particle diameter. The average particle diameter indicates an average particle diameter (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation. It may be measured by a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device.

A negative active material for a rechargeable lithium battery according to some embodiments includes a silicon-carbon composite including secondary particles in which nano silicon primary particles are agglomerated and an amorphous carbon coating layer on a surface of the secondary particles; and sodium silicate.

Sodium silicate has no reactivity with lithium, which helps reduce the possibility of or prevents an irreversible reaction with lithium during charging and discharging, and thus, the irreversible capacity may be suppressed.

A mixing ratio of the nano silicon and the amorphous carbon may be about 10:90 to about 95:5 by weight, e.g., about 20:80 to about 90: 10 by weight.

The silicon-carbon composite may further include a crystalline carbon. If the silicon-carbon composite further includes the crystalline carbon, the conductivity may be improved, and thus, rate capability may be increased.

The crystalline carbon may include graphite such as unspecified shape, sheet, flake, spherical or fiber shaped natural graphite or artificial graphite.

If the silicon-carbon composite further includes crystalline carbon, an amount of the amorphous carbon may be, e.g., about 30 wt% to about 70 wt% based on the total weight of the silicon-carbon composite, an amount of the crystalline carbon may be, e.g., about 1 wt% to about 20 wt%, based on the total weight of the silicon-carbon composite. An amount of the silicon nano particle (*e.g.* nano silicon primary particles) may be, e.g., about 20 wt% to about 70 wt%, or about 30 wt% to about 60 wt%, based on the total weight of the silicon-carbon composite.

If the amorphous carbon is in the form of a coating, a thickness of the amorphous carbon may be about 2 nm to about 500 nm.

In an implementation, the sodium silicate may be on a surface of the primary particles.

In an implementation, an amount of sodium silicate may be an amount except for the silicon-carbon composite, e.g., may be about 20 wt% or less, or about 1 wt% to about 20 wt% based on the total weight of the negative active material.

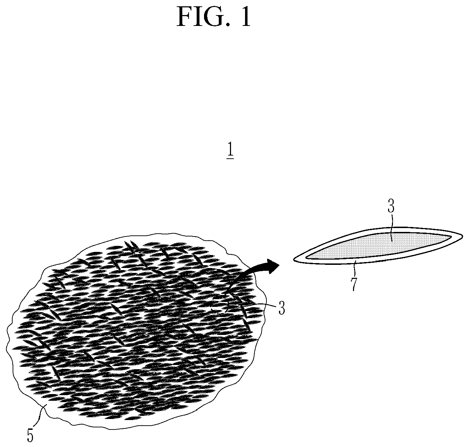

FIG. 1 schematically shows the structure of the negative active material 1 according to some embodiments, and includes secondary particles in which nano silicon primary particles 3 are agglomerated, and an amorphous carbon coating layer 5 on a surface of the secondary particle. The secondary particle may be inside, e.g., may form or be a part of the interior of, the active material and the amorphous carbon may be outside, e.g., may form or be a part of the exterior of, the active material. In an implementation, the secondary particle may be referred to as a core or a center part, and the amorphous carbon coating layer may be referred to as an outer part or a shell. The amorphous carbon may also be filled between the primary particles. If the silicon-carbon composite further includes the crystalline carbon, the crystalline carbon may be agglomerated together with the primary particle to include in the secondary particle.

As shown in enlarged view of a portion of FIG. 1, sodium silicate 7 may be on a surface of the nano silicon primary particles 3.

The nano silicon primary particles may have a full width at half maximum, FWHM(111) of an X-ray diffraction using a CuKα ray at a (111) plane ranging from about 0.3 degree (°) to about 7 degree (°), about 0.3 degree (°) to about 5 degree (°), about 0.3 degree (°) to about 3 degree (°), about 0.3 degree (°) to about 1 degree (°), or about 0.5 degree (°) to about 1 degree (°). If the full width at half maximum of the nano silicon primary particles is within the range, the expansion of the battery may be further reduced and the cycle-life characteristics of the battery may be further improved. The silicon-carbon composite according to some embodiments may have an average particle diameter D50 of, e.g., about 30 µm or less, about 1 µm to about 30 µm, about 2 µm to about 20 µm, or about 3 µm to about 15 µm. If the average particle diameter of the silicon-carbon composite satisfies the ranges, lithium ions may be readily diffused inside the negative active material composite, battery resistance may be reduced, and rate capability may be further improved. It may help suppress the excessive increases in the specific surface area of the negative active material, thereby reducing the side reaction with the electrolyte.

A particle diameter of the nano silicon primary particles may be about 10 nm to about 1,000 nm, e.g., about 20 nm to about 150 nm. The particle diameter of the nano silicon primary particles may be an average particle diameter (D50) and may be measured by a particle size analyzer. If the particle diameter of the silicon is within the ranges, extreme volume expansion caused during charge and discharge may be suppressed, and a breakage of the conductive path due to crushing of particle may be prevented. If the particle diameter of the nano silicon primary particles is within the ranges, it may have the suitable full width at a half maximum, FWHM(111) of about 0.3 degree (°) to about 7 degree (°).

In an implementation, the particle diameter of the secondary particle may be appropriately adjusted.

As such, the negative active material according to some embodiments may include nano silicon primary particles and sodium silicate on the surface of the nano silicon primary particles and resultantly, sodium silicate may be between the nano silicon primary particles, so that a reaction due to the use or presence of Na may uniformly occur throughout the negative active material. Otherwise, e.g., if the negative active material were to include silicon oxide, rather than silicon or sodium silicate, silicon oxide could react with lithium, could increase the initial irreversible capacity, and thus, the efficiency could be deteriorated. Silicon oxide may have a micrometer size of about 5 µm, and its large size could make it difficult for the reaction due to the use of Na to occur uniformly throughout the negative active material, and thus, the effects for improving efficiency could be small, compared to silicon if using Na. If a pulverization is performed to reduce the size of silicon oxide, the oxidation of silicon could be more likely to occur, leading to a significant increase more than 1 of x value in SiOₓ, silicon oxide, relatively decreasing an amount of Si, and thus, the capacity and the efficiency may be significantly reduced.

The Na source material used for preparing the negative active material according to one embodiment may have reactivity with silicon oxide, the use of silicon oxide could cause the reaction of the Na source with the silicon oxide to severely occur, and thus, an excess sodium silicate could be inappropriately prepared.

In the silicon-carbon composite, amorphous carbon may include, e.g., soft carbon, hard carbon, mesophase pitch carbide, sintered cokes, or combinations thereof.

Such a negative active material according to some embodiments may be prepared by the following procedures.

A Na source may be added to a nano silicon liquid to prepare a mixed liquid. The nano silicon liquid may be prepared by mixing silicon particles with micrometer sizes to an organic solvent. The mixing may be performed by milling so that the size of the silicon particles may be reduced from micrometers to nanometers, and thus becoming nano silicon, thereby preparing the nano silicon liquid. The milling may be performed by using a bead mill or a ball mill.

The organic solvent may include solvents which do not oxidize the silicon particle and may be readily volatilized, e.g., isopropyl alcohol, ethanol, methanol, butanol, N-methyl pyrrolidone, propylene glycol, or combinations thereof.

A mixing ratio of the silicon particle and the organic solvent may be about 5 : 95 by weight to about 30 : 70 by weight, or about 10 : 90 by weight to about 25 : 75 by weight. If the mixing ratio of the silicon particle and the organic solvent falls within the ranges, the milling efficiency may be maximized.

The Na source may be Na source materials having a reactivity with SiO₂, e.g., NaOH, Na₂CO₃, or combinations thereof.

In mixing, a mixing ratio of the nano silicon liquid and the Na source may be controlled in order to have a mixing ratio of the nano silicon and the Na source to be about 95:5 by weight to about 70:30 by weight, e.g., about 90:10 by weight to about 75:25 by weight. If the mixing ratio of the nano silicon and the Na source is within the ranges, the initial efficiency of the battery may be more improved.

The mixed liquid may be dried to prepare a dried product. The drying may be performed by a spray-drying. The drying may be performed at about 90 °C to about 170 °C, or about 100 °C to about 140 °C.

In the spray drying, nano silicon primary particles, on the surface of which the Na source material is positioned, may be agglomerated to prepare a secondary particle. If the spray drying is performed at the ranges of temperature, the agglomeration of the primary particles to be the secondary particles may be more suitably performed.

In the mixed liquid preparation, an admixing of a crystalline carbon to the nano silicon liquid may be further performed. A mixing ratio of the nano silicon and the crystalline carbon may be about 10 : 90 by weight to about 95 : 5 by weight, or about 20 : 80 by weight to about 90 : 10 by weight. If the mixing ratio of the nano silicon and the crystalline carbon is within the ranges, the electrical resistance may be well maintained.

If the addition of the crystalline carbon is performed, nano silicon primary particles on the surface of which the Na source is positioned, may be agglomerated to prepare a secondary particle. The Na source may also be on the surface of the crystalline carbon.

Thereafter, the dried product may be mixed with an amorphous carbon precursor. A mixing ratio of the dried product and the amorphous carbon precursor may be about 80 : 20 to about 50 : 50 by weight. If the mixing ratio of the dried product and the amorphous carbon precursor is within the ranges, excess amorphous carbon may not be included in the final negative active material, and thus, more suitable utilization of silicon may be obtained and the excellent initial efficiency may be exhibited.

The amorphous carbon precursor may include coal pitch, meso pitch, mesophase pitch, petroleum pitch, meso carbon pitch, coal-based oil, petroleum-based heavy oil, or a polymer resin such as a phenol resin, a furan resin, a polyimide resin, or the like.

The obtained mixture may be heat-treated to prepare a heat-treated product. The heat treatment may be performed at about 400 °C to about 1,200 °C for about 1 hour to about 5 hours. The heat treatment may be carried out under an N₂ atmosphere or an argon atmosphere. If the heat treatment is performed under the atmospheres described above, the oxidation of silicon and the production of SiC may be suppressed and the amorphous carbon may be effectively prepared, thereby reducing resistance of the active material. If the heat treatment is performed under the above conditions, the resulting nano silicon primary particles may have a suitable full width at a half maximum, FWHM(111) of about 0.3 degree (°) to about 7 degree (°).

The heat treatment may facilitate the conversion of the amorphous carbon precursor to the amorphous carbon, which may surround the surface of the secondary particle. The amorphous carbon may be between the primary particles.

In the heat treatment, the silicon oxide included in the silicon-carbon composite, e.g., on the surface of the nano silicon primary particles, may react with the Na source material to prepare sodium silicate, and then the resulting sodium silicate may be on the surface of the primary particles.

The silicon oxide may be prepared by reacting silicon with oxygen presented in air during the nano silicon primary particles preparation. Thus, silicon oxide may be removed from the final negative active material, preventing the problems in which silicon oxide reacts with lithium during charging to prepare lithium silicates such as Li₂SiO₃, Li₄SiO₄, or the like, which are inactive material and may not participate in the subsequent charge and the discharge, thereby reducing capacity.

Another embodiment provides a rechargeable lithium battery including a negative electrode, a positive electrode, and an electrolyte.

The negative electrode may include a current collector and a negative active material layer on the current collector and including the negative active material according to one embodiment.

The negative active material according to one embodiment may be included as a first negative active material and a crystalline carbon may be included as a second negative active material. A mixing ratio of the first negative active material and the second negative active material may be about 99 : 1 to about 50 : 50 by weight. In an implementation, the negative active material may include the first negative active material and second negative active material at a weight ratio of about 95 : 5 to about 80 : 20.

In the negative active material layer, the amount of the negative active material may be about 95 wt% to about 98 wt%, based on the total weight of the negative active material layer.

The negative active material layer may include a binder, and may further include a conductive material. An amount of the binder may be about 1 wt% to about 5 wt% based on the total weight of the negative active material layer. An amount of the conductive material may be about 1 wt% to about 5 wt% based on the total weight of the negative active material layer.

The binder may help improve binding properties of negative active material particles with one another and with a current collector. The binder may include a non-aqueous binder, an aqueous binder, or a combination thereof.

The non-aqueous binder may include, e.g., an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may include, e.g., a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

If the aqueous binder is used as a negative electrode binder, a cellulose compound may be further used to provide viscosity as a thickener. The cellulose compound may include, e.g., carboxymethyl cellulose, hydroxypropylmethyl cellulose, methyl cellulose, or alkali metal salts thereof. The alkali metal may include Na, K, or Li. The thickener may be included in an amount of about 0.1 parts by weight to about 3 parts by weight based on 100 parts by weight of the negative active material.

The conductive material may be included to provide electrode conductivity, and a suitable electrically conductive material may be used as a conductive material unless it were to cause a chemical change. Examples of the conductive material may include a carbon material such as natural graphite, artificial graphite, carbon black, acetylene black, ketjen black, a carbon fiber, and the like; a metal material of a metal powder or a metal fiber including copper, nickel, aluminium, silver, and the like; a conductive polymer such as a polyphenylene derivative; or a mixture thereof.

The current collector may include, e.g., a copper foil, a nickel foil, a stainless steel foil, a titanium foil, a nickel foam, a copper foam, a polymer substrate coated with a conductive metal, or a combination thereof.

The positive electrode may include a current collector and a positive active material layer formed on the current collector.

The positive electrode active material may include lithiated intercalation compounds that reversibly intercalate and deintercalate lithium ions. In an implementation, a composite oxide of a metal, e.g., cobalt, manganese, nickel, or a combination thereof, and lithium, may be used. In an implementation, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α}(0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄ Li _{(3-f)}J₂(PO₄)₃ (0≤f≤2); Li (_{3-f})Fe₂(PO₄)₃ (0≤f≤2); LiₐFePO₄ (0.90≤a≤1.8)

In the above chemical formulae, A may be, e.g., Ni, Co, Mn, or combinations thereof; X may be, e.g., Al, Ni, Co, Mn, Cr, Fe, Mg, Sr, V, a rare earth element, or combinations thereof; D¹ may be, e.g., O, F, S, P, or combinations thereof; E may be, e.g., Co, Mn, or combinations thereof; T may be, e.g., F, S, P, or combinations thereof; G may be, e.g., Al, Cr, Mn, Fe, Mg, La, Ce, Sr, V, or combinations thereof; Q may be, e.g., Ti, Mo, Mn, or combinations thereof; Z may be, e.g., Cr, V, Fe, Sc, Y, or combinations thereof; J may be, e.g., V, Cr, Mn, Co, Ni, Cu, or combinations thereof; and L¹ may be, e.g., Mn, Al, or combinations thereof.

The compounds may have a coating layer on the surface, or may be mixed with another compound having a coating layer. The coating layer may include a coating element compound, e.g., an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be formed using a method having no adverse influence on properties of a positive electrode active material by using these elements in the compound, e.g., the method may include spray coating, dipping, or the like.

In the positive electrode, an amount of the positive active material may be about 90 wt% to about 98 wt% based on the total weight of the positive active material layer.

In an implementation, the positive active material layer may further include a binder and a conductive material. The binder and the conductive material may be included in an amount of about 1 wt% to about 5 wt%, respectively based on the total amount of the positive active material layer.

The binder may help improve binding properties of positive active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like.

The conductive material may be included to provide electrode conductivity, and a suitable electrically conductive material may be used as a conductive material unless it were to cause a chemical change. Examples of the conductive material may include a carbon material such as natural graphite, artificial graphite, carbon black, acetylene black, ketjen black, a carbon fiber and the like; a metal material of a metal powder or a metal fiber including copper, nickel, aluminium, silver, and the like; a conductive polymer such as a polyphenylene derivative; or a mixture thereof.

The current collector may include, e.g., Al.

The electrolyte includes a non-aqueous organic solvent and a lithium salt.

The non-aqueous organic solvent may serve as a medium for transmitting ions taking part in the electrochemical reaction of a battery.

The non-aqueous organic solvent may include a carbonate, ester, ether, ketone, alcohol, or aprotic solvent.

The carbonate solvent may include, e.g., dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester solvent may include, e.g., methyl acetate, ethyl acetate, n-propyl acetate, dimethyl acetate, methylpropionate, ethylpropionate, decanolide, mevalonolactone, caprolactone, or the like. The ether solvent may include, e.g., dibutyl ether, tetraglyme, diglyme, dimethoxyethane, 2-methyltetrahydrofuran, tetrahydrofuran, or the like. The ketone solvent may include, e.g., cyclohexanone, or the like. The alcohol solvent may include, e.g., ethyl alcohol, isopropyl alcohol, or the like. The aprotic solvent may include, e.g., nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, or the like.

The non-aqueous organic solvent may be used alone or in a mixture. If the non-aqueous organic solvent is used in a mixture, the mixture ratio may be controlled in accordance with a desirable battery performance.

In an implementation, the carbonate solvent may include a mixture with a cyclic carbonate and a linear carbonate. The cyclic carbonate and linear carbonate may be mixed together in a volume ratio of about 1:1 to about 1:9, and if the mixture is used as an electrolyte, it may have enhanced performance.

The non-aqueous organic solvent may further include an aromatic hydrocarbon solvent as well as the carbonate solvent. The carbonate solvent and the aromatic hydrocarbon solvent may be mixed together in a volume ratio of about 1:1 to about 30:1.

The aromatic hydrocarbon organic solvent may be an aromatic hydrocarbon compound represented by Chemical Formula 1.

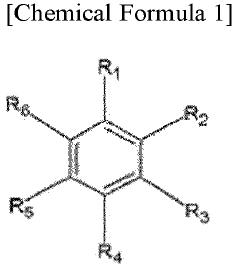

In Chemical Formula 1, R₁ to R₆ may each independently be, e.g., hydrogen, a halogen, a C1 to C10 alkyl group, a C1 to C10 haloalkyl group, or a combination thereof.

Examples of the aromatic hydrocarbon organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, or an ethylene carbonate-based compound represented by Chemical Formula 2 as an additive for improving cycle life.

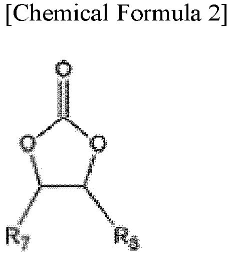

In Chemical Formula 2, R₇ and R₈ may each independently be, e.g., hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. An amount of the additive for improving the cycle-life characteristics may be used within an appropriate range.

The lithium salt dissolved in an organic solvent may supply a battery with lithium ions, may basically operate the rechargeable lithium battery, and may help improve transportation of the lithium ions between a positive electrode and a negative electrode. Examples of the lithium salt may include LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, e.g., an integer of about 1 to about 20, lithium difluoro(bisoxolato) phosphate, LiCl, LiI, LiB(C₂O₄)₂ (lithium bis(oxalato) borate: LiBOB) and lithium difluoro(oxalate)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be between the positive electrode and the negative electrode depending on a type of a rechargeable lithium battery. The separator may include polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, or the like.

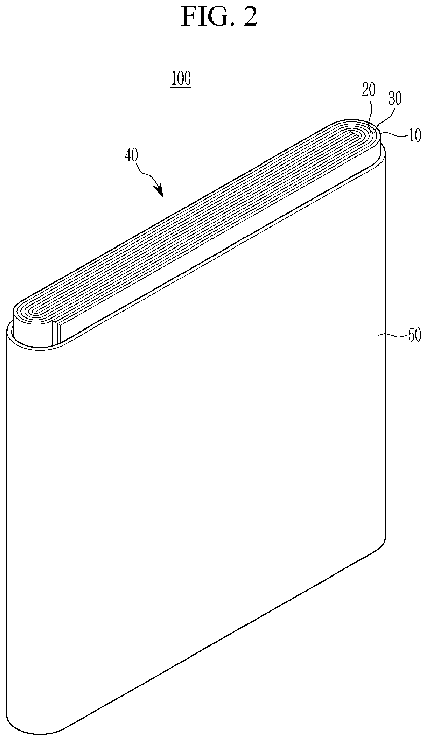

FIG. 2 is an exploded perspective view of a rechargeable lithium battery according to an embodiment. In an implementation, as illustrated in the drawings, the rechargeable lithium battery may be a prismatic battery, or may include variously-shaped batteries such as a cylindrical battery, a pouch battery, or the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### (Example 1)

An ethanol solvent and silicon particles with a particle diameter of several micrometers were mixed at a weight ratio of 9:1 to prepare a nano silicon liquid by using a beads mill (Netzsch, Germany).

The nano silicon liquid was mixed with NaOH to obtain a mixing ratio of nano silicon and NaOH to be 80:20 by weight ratio, and then the resulting mixed liquid was spray-dried at 120 °C using a spray drier to prepare a dried product.

The dried product and meso pitch were mixed at 70:30 by weight ratio and the mixture was heat-treated at 1,000 °C under an N₂ atmosphere for 4 hours to prepare a negative active material. The prepared negative active material included an agglomerated product, secondary particles in which nano silicon primary particles with sodium silicate on the surface were agglomerated, and a soft carbon coating layer on the surface of the agglomerated product. An amount of the nano silicon primary particles was 70 wt%, an amount of the soft carbon amorphous carbon was 20 wt%, and an amount of sodium silicate was balanced. The soft carbon coating layer had a thickness of 2 nm to 500 nm. The agglomerate product had an average particle diameter D50 of 10 µm.

97.5 wt% of the prepared negative active material, 1 wt% of carboxymethyl cellulose, and 1.5 wt% of a styrene butadiene rubber were mixed in a water solvent to prepare a negative active material layer slurry.

The negative active material slurry was coated on a Cu foil current collector, dried, and pressurized to prepare a negative electrode including the current collector and a negative active material layer formed on the current collector.

Using the negative electrode, a counter electrode, and an electrolyte, a rechargeable lithium cell was fabricated. As the electrolyte, a 1 M LiPF₆ dissolved in a mixed solvent of ethylene carbonate and dimethyl carbonate (3:7 volume ratio) was used.

### (Example 2)

A negative active material was prepared by the same procedure as in Example 1, except that Na₂CO₃ was used instead of NaOH and the nano silicon liquid was mixed with Na₂CO₃ to obtain a mixing ratio of nano silicon and Na₂CO₃ to be 80:20 by weight ratio.

The negative active material was used to fabricate a negative electrode and a half-cell by the same procedure as in Example 1.

### (Comparative Example 1)

An ethanol solvent and silicon particles with a particle diameter of several micrometers were mixed at a weight ratio of 9:1 weight ratio to prepare a nano silicon liquid by using a beads mill (Netzsch, Germany).

The nano silicon liquid was spray-dried at 120 °C using a spray drier to prepare a dried product.

The dried product and meso pitch were mixed at 70:30 by weight ratio and the mixture was heat-treated at 1,000 °C under an N₂ atmosphere for 4 hours to prepare a negative active material. The prepared negative active material included an agglomerated product, secondary particles in which nano silicon primary particles were agglomerated, and a soft carbon coating layer positioned on the surface of the agglomerated product. An amount of the nano silicon primary particles was 80 wt%, an amount of the soft carbon amorphous carbon was 20 wt%. The soft carbon coating layer had a thickness of 2 nm to 500 nm.

The negative active material was used to fabricate a negative electrode and a half-cell by the same procedure as in Example 1.

### (Comparative Example 2)

SiOₓ (x=1.1) was mixed with Na₂CO₃ at a weight ratio of 80:20.

The obtained mixture and meso pitch were mixed at 70:30 by weight ratio and the resulting mixture was heat-treated at 1,000 °C under an N₂ atmosphere for 4 hours to prepare a negative active material. The prepared negative active material included SiOₓ (x=1.1), had sodium silicate positioned on the surface, and had a soft carbon coating layer.

The negative active material was used to fabricate a negative electrode and a half-cell by the same procedure as in Example 1.

### Experimental Example 1: Measurement of X-ray diffraction characteristic

The X-ray diffraction for the nano silicon primary particles prepared by using the nano silicon liquid according to Examples 1 and 2 was carried out by using a CuKα to measure a full width at a half maximum, FWHM (111) at a (111) plane.

The X-ray diffraction analysis was measured under a condition of a scan speed (°/S) of 0.054, a step size (°/step) of 0.01313, and time per step of 62.475s in a range of 2θ= 10° to 80°.

The measured results are shown in Table 1.

**Table 1**

| | Full width at a half maximum, FWHM (111) |
|---|---|
| Example 1 | 0.636 degree (°) |
| Example 2 | 0.625 degree (°) |

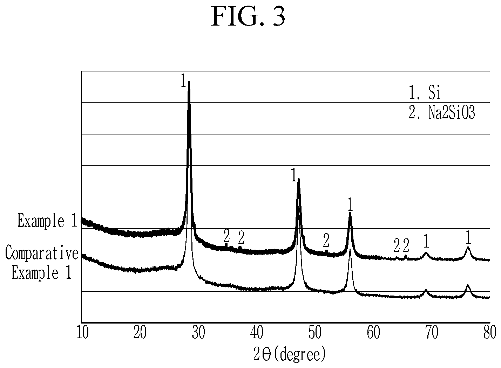

The X-ray diffraction analysis of the negative active materials of Example 1 and Comparative Example 1 was measured by using a CuKα ray. The results are shown in FIG. 3. The X-ray diffraction analysis was measured under a condition of a scan speed (°/S) of 0.054, a step size (°/step) of 0.01313, and time per step of 62.475s in a range of 2θ= 10° to 80°.

As shown in FIG. 3, a peak corresponding to Na₂SiO₃ exhibited in the negative active material of Example 1, which is different from Comparative Example 1. From these results, it may be clearly seen that the negative active material of Example 1 had sodium silicate.

### Experimental Example 2: Evaluation of specific capacity and efficiency

The half-cells according to Examples 1 and 2 and Comparative Examples 1 and 2 were charged and discharged at 0.1 C once and the charge and discharge capacities were measured. The measured discharge capacity is shown in Table 2, as a specific capacity.

A ratio of the measured discharge capacity to the measured charge capacity was calculated. The results are shown in Table 2, as an efficiency.

### Experimental Example 3: Evaluation of CFC (coin full cell) cycle-life characteristic

Full cells were fabricated by using the negative electrodes and the electrolyte according to Examples 1 and 2, and Comparative Examples 1 and 2, a positive electrode, and an electrolyte. The positive electrode was prepared by mixing 97.3 wt% of LiCoO₂, 1.4 wt% of polyvinylidene fluoride, and 1.3 wt% of ketjen black in an N-methyl pyrrolidone solvent to prepare a positive active material slurry, coating the positive active material slurry on an Al foil, drying, and pressurizing. The full cells were charged and discharged under the following conditions for 100 cycles.
Charge: 1.0C/ Cut-off: 4.2V-0.05C
Discharge: 1.0C/ Cut-off: 2.5V

A ratio of discharge capacity at 100^{th} cycle relative to discharge capacity at 1^{st} cycle was measured. The results are shown Table 2.

**Table 2**

| | Specific capacity (mAh/g) | Efficiency (%) | CFC capacity retention (100 cycle, %) |
|---|---|---|---|
| Example 1 | 1645 | 88.3 | 83 |
| Example 2 | 1638 | 88.5 | 85 |
| Comparative Example 1 | 1650 | 79.3 | 72 |
| Comparative Example 2 | 1230 | 74.5 | 71 |

As shown Table 2, Examples 1 and 2 exhibited significantly excellent the efficiency and the cycle-life characteristics than Comparative Examples 1 and 2.

By way of summation and review, as a negative active material for a rechargeable lithium battery, crystalline carbon such as graphite may be used, and research using it has been undertaken enough to obtain performance approaching a theoretical energy density There are still demands for higher energy density and, as alternatives, a silicon active material has been considered.

Silicon has lower initial efficiency than crystalline carbon, and it may exhibit a very large volume expansion during charge and discharge, and thus, the deteriorated cycle-life characteristics may be exhibited. Thus, the silicon active materials may be of limited use.

One or more embodiments may provide a negative active material for a rechargeable lithium battery exhibiting excellent cycle-life characteristics.

A negative active material for a rechargeable lithium battery according to some embodiment may exhibit excellent initial efficiency and cycle-life characteristics.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative active material for a rechargeable lithium battery, the negative active material comprising:
a silicon-carbon composite comprising:
secondary particles in which nano silicon primary particles are agglomerated, and
an amorphous carbon coating layer on a surface of the secondary particles; and
sodium silicate.

2. The negative active material for a rechargeable lithium battery as claimed in claim 1, wherein the nano silicon primary particles have a full width at half maximum FWHM(111) at a (111) plane of about 0.3 degree (°) to about 7 degree (°) by an X-ray diffraction using a CuKα ray.

3. The negative active material for a rechargeable lithium battery as claimed in claim 1 or claim 2, wherein the sodium silicate is on a surface of the nano silicon primary particles.

4. The negative active material for a rechargeable lithium battery as claimed in claim 3, wherein the silicon-carbon composite has an average particle diameter of about 30 µm or less.

5. The negative active material for a rechargeable lithium battery as claimed in any one of claims 1 to 4, wherein the silicon-carbon composite further includes crystalline carbon.

6. The negative active material for a rechargeable lithium battery as claimed in any one of claims 1 to 5, wherein the negative active material for the rechargeable lithium battery is prepared by:
adding a Na source to a nano silicon liquid to prepare a mixed liquid;
drying the mixed liquid to prepare a dried product;
mixing the dried product with an amorphous carbon precursor to prepare a mixture; and
heat-treating the mixture.

7. The negative active material for a rechargeable lithium battery as claimed in claim 6, wherein the Na source comprises NaOH, Na₂CO₃, or combinations thereof.

8. A rechargeable lithium battery, comprising:
a negative electrode including the negative active material of any one of claims 1 to 7;
a positive electrode; and
an electrolyte.
